(19) **Europäisches Patentamt**
European Patent Office
Office européen des brevets

(11) **EP 3 979 011 A1**

(12) **EUROPÄISCHE PATENTANMELDUNG**

(43) Veröffentlichungstag:
06.04.2022 Patentblatt 2022/14

(21) Anmeldenummer: 20203552.3

(22) Anmeldetag: 23.10.2020

(51) Internationale Patentklassifikation (IPC):
*G05B 19/042* (2006.01)    *G06F 21/57* (2013.01)

(52) Gemeinsame Patentklassifikation (CPC):
**G05B 19/0428; G06F 21/577;** G06F 2221/034

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **30.09.2020 EP 20199302**

(71) Anmelder: **Siemens Aktiengesellschaft
80333 München (DE)**

(72) Erfinder: **Kröselberg, Dirk
81541 München (DE)**

(54) **ERMITTELN EINES SICHERHEITSZUSTANDS**

(57)    Die Erfindung betrifft ein Verfahren zum Ermitteln eines Sicherheitszustands von zumindest einer sicherheitsrelevanten Systemanforderung eines Automatisierungssystems, wobei das Automatisierungssystem mehrere Geräte aufweist, mit den Schritten: (a) Bereitstellen von zumindest einer technischen Funktion des Geräts für die jeweilige sicherheitsrelevante Systemanforderungen, b) Bereitstellen eines Zustands der zumindest einen technischen Funktion des Geräts; c) Bereitstellen zumindest eines Analyseergebnisses durch Analyse des Zustands unter Berücksichtigung der sicherheitsrelevanten Systemanforderungen, und d) Erstellen eines Signals auf Basis des zumindest einen Analyseergebnisses, wobei das Signal den Sicherheitszustand signalisiert.

Die Erfindung findet unter Anderem Anwendung in einem Automatisierungssystem in Form einer Produktionsanlage, einem Rechnernetz, einem Krankenhauspatienteninformationssystem, einer Gleis- oder Signalanlage, einer smart home Installation, und/oder einem Elektrofahrzeug.

**Beschreibung**

Die Erfindung betrifft ein Verfahren und eine Sicherheitseinheit zum Ermitteln eines Sicherheitszustands.

Seit Jahren nehmen Cyberattacken auf industrielle Anlagen zu. Derartige Anlagen müssen hoch verfügbar sein und Kontrollaufgaben, insbesondere in kritischen Infrastrukturen, zuverlässig erfüllen. Daher ist zwingend erforderlich industrielle Anlagen vor Cyberattacken geschützt werden, die unbeabsichtigt oder beabsichtigt den Betrieb dieser Anlagen schwächen oder diese vollständig zum Erliegen bringen. Daher existiert eine große Anzahl an Sicherheitsanforderungen, welche die industriellen Anlagen erfüllen müssen, um ihren einwandfreien Betrieb auch zukünftig sicherstellen zu können.

Diese Sicherheitsanforderungen werden heute zumeist per Hand vor Inbetriebnahme der Anlage gegenüber einer geplanten (projektierten) Anlage abgeglichen, um mögliche Schwachstellen, beispielsweise in der Konfiguration der Anlage, aufdecken zu können. Hierdurch kann die Konformität der industriellen Anlage gegenüber einem Katalog an Sicherheitsanforderungen eines Standards, wie beispielsweise IEC 62443-3-3 oder Ähnliches, in Form eines Sicherheitszustands nachgewiesen werden. Die Verifikation der Konformität ist aufwendig und im Betrieb der Anlage manuell nicht oder schwer umsetzbar.

Daher ist es eine Aufgabe der vorliegenden Erfindung ein Verfahren und eine Sicherheitseinrichtung zum Ermitteln eines Sicherheitszustands von sicherheitsrelevanten Systemanforderungen eines Automatisierungssystems anzugeben, welches auch bei Betrieb des Automatisierungssystems den Sicherheitszustand in einfacher und zuverlässiger Art und Weise ermöglicht.

Diese Aufgabe wird durch die unabhängigen Ansprüche der vorliegenden Erfindung gelöst. Die abhängigen Ansprüche beschreiben Weiterbildungen der Erfindung.

Die Erfindung betrifft ein Verfahren zum Ermitteln eines Sicherheitszustands von zumindest einer sicherheitsrelevanten Systemanforderung eines Automatisierungssystems, wobei das Automatisierungssystem mehrere Geräte aufweist, mit folgenden Schritten:

> a) Bereitstellen von zumindest einer technischen Funktion des Geräts für die jeweilige sicherheitsrelevante Systemanforderungen;
> b) Bereitstellen eines Zustands der zumindest einen technischen Funktion des Geräts;
> c) Bereitstellen zumindest eines Analyseergebnisses durch Analyse des Zustands unter Berücksichtigung der sicherheitsrelevanten Systemanforderungen;
> d) Erstellen eines Signals auf Basis des zumindest einen Analyseergebnisses, wobei das Signal den Sicherheitszustand signalisiert.

Das Verfahren zeichnet sich dadurch aus, dass sowohl in einfacher Art und Weise, d.h. bspw. automatisiert, als auch die Ermittlung des Sicherheitszustandes des Automatisierungssystems während des Betriebs ermöglicht wird.

Der Begriff Sicherheitszustand beschreibt, ob das Automatisierungssystem mit seinen Geräten gut, d.h. der Sicherheitszustand ist hoch, oder schlecht, d.h. der Sicherheitszustand ist niedrig, gegen Cyberangriffe geschützt ist. In diesem Zusammenhang bedeutet ein hoher Sicherheitszustand, dass das Automatisierungssystem mehrere sicherheitsrelevante Systemanforderungen derart erfüllt, dass ein Angreifer das jeweilige Gerät gar nicht oder nur mit sehr geringer Wahrscheinlichkeit in seinem Betrieb, der bestimmte technische Funktionen des Geräts betrifft, stören oder gar lahmlegen kann. Im Gegensatz dazu bedeutet ein niedriger Sicherheitszustand, dass das jeweilige Gerät gegen bestimmte Arten von Cyberangriffen, die auf bestimmte technische Funktionen des Geräts einwirken, gering oder gar nicht geschützt ist.

Der Begriff sicherheitsrelevante Systemanforderung bezieht sich auf einzelne, aus, beispielsweise einem standardisierten, Katalog an Systemanforderungen, die ein jeweiliges Gerät des Automatisierungssystems erfüllen muss, um mehr oder weniger geschützt zu sein und somit zu einem hohen oder niedrigen Sicherheitszustand des Automatisierungssystems beizutragen. Derartige Kataloge sind beispielsweise aus einem Standard IEC 62443-3-3 oder IEC62443-4-2 bekannt. Dort findet sich unter Anderem als sicherheitsrelevante Systemanforderung, ob das Gerät einem Nutzer den Zugang in Form eines Passworts oder einer zwei Faktor Autorisierung gewährt. Eine andere sicherheitsrelevante Systemanforderungen fordert, dass ungenutzte Ports einer IP basierten Kommunikation (IP-Internetprotokoll) oder, dass Ports, die in einer Projektierungsphase des Automationssystems als unbenutzt definiert worden sind, im aktuellen Betrieb geöffnet oder geschlossen sind.

Der Begriff technische Funktion bezieht sich auf eine jeweilige Funktionalität des Geräts, wobei diese Funktionalität in Soft- und/oder Hardware realisiert und bereitgestellt ist, und ggfs. im Betrieb des Gerätes nutzbar ist. Neben einer klassischen physischen Funktionalität, wie Transportieren oder Fräsen eines Werkstücks, kann diese Funktionalität auch in einer Kommunikation oder einer Steuerung eines weiteren Geräts, eines Zugangsmanagements, wie Authentifizierung oder Autorisierung, eines Nutzers oder eines weiteren Geräts, oder auch in einer Ausfallsicherheit des Geräts durch Verfügbarkeit eines Notstromaggregats verstanden werden. Diese Beispiele nun sind nicht abschließend und somit beschränkend für den Schutzumfang des Begriffs technische Funkseite zu verstehen. Vielmehr betrifft der Begriff technische Funktion jede in Hardware und/oder Software realisierte Funktionalität des Geräts.

Der Begriff Zustand der zumindest einen technischen Funktion des Geräts bezeichnet eine konkrete Ausgestaltung bzw. Parametrisierung der in Software und/oder Hardware realisierten Funktionalität. Beispielsweise beschreibt der Zustand eines für die Kommunikation zwischen dem Gerät und dem weiteren Gerät verwendeten Verschlüsselungsverfahrens eine Schlüssellänge, wie beispielsweise 64 Bit oder 512 Bit, die im Betrieb des Geräts eingesetzt wird. In einem anderen Beispiel beschreibt der Zustand Ports, die das Gerät nicht geschlossen hat.

Unter dem Begriff Analyseergebnis wird verstanden, inwieweit der Zustand der zumindest einen technischen Funktion des Gerätes dem entspricht, was die sicherheitsrelevante Systemanforderungen konkret fordert. Beispielsweise fordert die sicherheitsrelevante Systemanforderungen eine Verwendung einer Schlüssellänge von mindestens 256 Bit. Zeigt der Zustand an, dass eine Schlüssellänge von 128 Bit im Gerät eingesetzt wird, so erfüllt dieser Zustand die sicherheitsrelevante Systemanforderungen nicht. Zeigt der Zustand jedoch eine Schlüssellänge von 512 Bit an, so erfüllt die technische Funktion des Geräts die sicherheitsrelevante Systemanforderungen.

Unter dem Begriff Signal wird eine Information, bspw. realisiert durch einen Spannungszustand oder eine Nachricht, verstanden, das anzeigt, ob basierend auf dem zumindest einen Analyseergebnis des Geräts das Automatisierungssystem einen hohen oder einen niedrigen Sicherheitszustand aufweist.

Unter der Formulierung "Bereitstellen von zumindest einer technischen Funktion des Geräts für die jeweilige sicherheitsrelevante Systemanforderungen" ist zu verstehen, in welcher Art und Weise der benötigte Zustand für die zumindest eine technische Funktion des Gerätes erlangt oder abgerufen oder ausgelesen werden kann. Dies ist beispielsweise derart ausgestaltet, dass als Information bekannt ist, in welchem zugreifbaren Register des Geräts der Zustand abgerufen werden kann oder wie das Gerät mit einer Nachricht angesprochen werden muss, damit dieses den gewünschten Zustand der technischen Funktion selbstständig bereitstellt oder übermittelt.

Die Art und Weise, wie diese Bereitstellung umgesetzt wird, kann von Gerät zu Gerät unterschiedlich sein, beispielsweise wird ein Controller für einen Roboterarm anders datentechnisch angesprochen als eine Firewall.

In einer Weiterbildung der Erfindung umfasst die Bereitstellung des Zustands der technischen Funktion zumindest folgende Schritte:

-    Abrufen des Zustands der zumindest einen technischen Funktion von dem Gerät;
-    Speichern des Zustands für die Analyse, insbesondere außerhalb des Automatisierungssystems.

Durch diese Weiterbildung kann der Zustand für die nach dem Abrufen des Zustands nachfolgende Analyse in einer Speichereinheit gespeichert werden. Dies ist vorteilhaft, weil das Gerät möglicherweise nicht immer für den Abruf des Zustands der zumindest einen technischen Funktion zur Verfügung steht und somit kann die Analyse des Zustands und das Erstellen des Signals zeitlich unabhängig von dem Abruf des Zustands von bewerkstelligt werden.

Ferner wird in einer Weiterbildung der Erfindung das Abrufen des Zustands zu einem vorgebbaren Zeitpunkt von dem Gerät abgerufen, oder von dem Gerät selbstständig zum Speichern übermittelt oder bereitgestellt. Hierdurch kann das Verfahren selbst steuern, wann ein günstiger Zeitpunkt vorliegt den Zustand vom Gerät abzurufen. Zudem kann auch das Gerät selbstständig entscheiden, zu welchem Zeitpunkt das Übermitteln bzw. Bereitstellen des Zustands, beispielsweise während einer Abfolge von Arbeitsschritten des Geräts, am besten bewerkstelligt werden kann. Ferner ist diese Vorgehensweise vorteilhaft, weil dadurch eine potenzielle Störung der Abfolge von Arbeitsschritten, bspw. eine Echtzeitfähigkeit des Geräts, vermieden werden kann.

Vorzugsweise wird der vorgebare Zeitpunkt vor einem Produktionsbeginn, während einer Produktionspause, während einer Wartungsarbeit und/oder während einer reduzierten Produktionsgeschwindigkeit des Gerätes gesetzt. Durch diese Weiterbildung der Erfindung kann in vorteilhafter Weise erreicht werden, dass Störungen des Automatisierungssystems durch Übermitteln des Zustands zu einem sonst beliebigen Zeitpunkt reduziert bzw. vermieden wird. In einem hochkomplexen und optimierten Automatisierungssystem können Änderungen in der einer Signallaufzeit zwischen Geräten zu Störungen bzw. Produktionsfehlern führen. Daher ermöglicht diese Weiterbildung der Erfindung, dass eine Stabilität des Automationssystems bei Verwendung des erfindungsgemäßen Verfahrens gewährleistet werden kann.

In einer Weiterbildung der Erfindung weist das Speichern des Zustands ferner einen Zeitstempel ZT über einen Abruf des Zustands auf. Hierbei wird zu einem konkreten Wert des Zustands auch der Zeitpunkt in der Speichereinheit abgelegt, zudem der Zustand vom Gerät ermittelt wurde. Hierdurch kann in vorteilhafter Weise die Ermittlung des Sicherheitszustand in Abhängigkeit von einem Zeitpunkt, an dem der Zustand ermittelt wurde, realisiert werden. Hierdurch kann in vorteilhafter Weise die Zuverlässigkeit des Sicherheitszustands des Automatisierungssystem verbessert werden.

Ferner kann in einer vorzugweisen Weiterbildung ermöglicht werden, dass das Erstellen des Signals auf Basis des zumindest einen Analyseergebnisses eine Gewichtung des jeweiligen Analyseergebnisses für das Gerät in Abhängigkeit des Zeitstempels aufweist. So kann bei einer Bildung des Signals für Zustände, die einen älteren Zeitstempel aufweisen, als Zustände die einen jüngeren Zeitstempel aufweisen mit einer geringen Gewichtung bei der Ermittlung des Signals einfließen, weil eine Zuverlässigkeit der Zustände mit dem älteren Zeitstempel Geringeres als die Zustände mit einem jüngeren Zeitstempel. Hierdurch kann in vorteilhafter Weise die Zuverlässigkeit des Signals und somit des Sicherheitszustands verbessert werden.

In einer Weiterbildung der Erfindung weist das Erstellen des Signals auf Basis des zumindest einen Analyseergebnisses eine Gewichtung des jeweiligen Analyseergebnisses für das Gerät in zumindest einer der folgenden Abhängigkeiten auf:

- von einem Gerätetyp des Geräts;
- von einer vorgebaren Relevanz der sicherheitsrelevanten Systemanforderung zu einer vorgebaren Relevanz einer weiteren sicherheitsrelevanten Systemanforderung;
- von einer Anfälligkeit des Geräts aufgrund einer Schwachstelleninformation und/oder einer Lage des Geräts innerhalb des Automatisierungssystems;
- von zu mindestens einem Analyseergebnis eines der weiteren Geräte;
- von zumindest einem Analyseergebnis eines der weiteren Geräte, welches denselben Gerätetyp aufweist wie das Gerät.

Auf Grundlage einer oder mehrerer der oben genannten Abhängigkeiten kann die Erstellung des Signals auf Basis des zu müssen einen Analyseergebnisses gezielt an bestimmten Eigenschaften der Geräte oder der sicherheitsrelevanten Systemanforderungen angepasst werden, um damit eine Zuverlässigkeit bei der Ermittlung des Sicherheitszustands zu erhöhen.

Hierbei kann bei einer Abhängigkeit von einem Gerätetyp des Geräts die Gewichtung des Analyseergebnisses derart beeinflusst werden, dass bei einem Gerätetyp, der bei einer Manipulation schwerwiegendere Auswirkungen auf den Sicherheitszustand des Automatisierungssystems bewirkt als bei einem anderen Gerätetyp, das Analyseergebnis dieses Gerätetyp höher gewichtet wird als das Analyseergebnis bei dem anderen Gerätetyp. Beispielsweise sichert eine Firewall ein Netzsegment von Bürorechnern gegen ungewollten Datenverkehr ab. Eine Manipulation der technischen Funktion der Firewall richtet einen höheren Schaden an als eine Manipulation der technischen Funktion des Bürorechners. Daher wird das Analyseergebnis der Firewall bei der Ermittlung des Signals höher gewichtet als das Analyseergebnisses des Bürorechners.

Der Katalog von sicherheitsrelevante Systemanforderungen weist sicherheitsrelevante Systemanforderungen auf, die bei einem Cyberangriff einen höheren Schaden verursachen können, als andere sicherheitsrelevante Systemanforderungen. Daher ist es vorteilhaft den sicherheitsrelevanten Systemanforderungen eine vorgebare Relevanz zuzuordnen, die bei der Erstellung des Signals eine Gewichtung der Analyseergebnisse für die zugehörigen sicherheitsrelevanten Systemanforderungen ermöglichen. Hierdurch kann der Sicherheitszustand mit einer Höhe Zuverlässigkeit für das Automatisierungssystem ermittelt werden.

Ferner kann eine Anfälligkeit des Geräts von einer Schwachstelleninformation abhängen. So kann für ein bestimmtes Gerät die Schwachstelleninformation, dass ein vergleichbares Gerät in einem anderen Automatisierungssystem manipuliert worden ist, vorliegen. Hiermit kann durch eine niedrigere Gewichtung des Analyseergebnisses für das Gerät mit der vorliegenden Schwachstellen Information der Sicherheitszustand für das Automatisierungssystem reduziert werden, so dass Maßnahmen aufgrund des niedrigen Sicherheitszustand getroffen werden können.

Ferner kann auch eine Lage des Geräts innerhalb des Automatisierungssystems Grundlage für eine Gewichtung des jeweiligen Analyseergebnisses für das Gerät genutzt werden. Dient das Gerät beispielsweise zur Kommunikation des Automatisierungssystems mit dem öffentlichen Internet, d.h. es liegt am Netzwerkrand des Automatisierungssystems, so ist es einer Vielzahl von Cyberangriffen ausgesetzt. Daher kann das Analyseergebnisses für dieses Gerät mit einer geringen Gewichtung in die Erstellung des Signals einfließen, weil dadurch das Potenzial von Cyberangriffen aufgrund der Lage des Geräts repräsentiert werden kann. Hierdurch kann eine Genauigkeit bzw. Zuverlässigkeit des Sicherheitszustands des Automatisierungssystems weiter verbessert werden.

Ferner kann die Gewichtung des jeweiligen Analyseergebnisses für das Gerät auch in Abhängigkeit zumindest eines Analyseergebnisses eines weiteren Geräts abhängen. Beispielsweise zeigt sich, dass in einem ersten Gerät nur zulässige Ports offen sind, wohingegen in einem zweiten Gerät ein Port geöffnet ist, der eigentlich geschlossen sein sollte. Aufgrund dieses Fehlers wird nicht nur das Analyseergebnisses des zweiten Geräts mit einer niedrigen Gewichtung bei der Erstellung des Signals berücksichtigt, sondern auch das Analyseergebnisses des ersten Geräts. Durch diese Vorgehensweise wird bewirkt, dass eine fehlerhafte Konfiguration in einem Gerät auch negative Auswirkungen auf den Sicherheitszustand eines weiteren Geräts und somit auf den Sicherheitszustand des gesamten Automatisierungssystems haben kann. Hierdurch wird der Sicherheitszustand des Automatisierungssystems genauer ermittelt.

Ferner kann bei der Gewichtung des jeweiligen Analyseergebnisses für das Gerät zumindest das Analyseergebnisses eines weiteren Gerätes, das denselben Gerätetyp aufweist, wie das Gerät in die Erstellung des Signals, einfließen. Analog zum obigen Beispiel wird bei einem Fehler eines Geräts, zum Beispiel eines Controller, auch das Analyseergebnisses aller weiteren Controller, die also zum gleichen Gerätetyp gehören, analog zum Analyseergebnisses des Geräts, welches den Fehler aufweist, mit einer niedrigen Gewichtung in die Ermittlung des Signals einfließen.

In den obigen Ausführungen wurden niedrigere Gewichtungen bei Vorhandensein eines Fehlers oder einer Schwachstelleninformation verwendet. Die niedrigeren Gewichtungen sind lediglich beispielhaft zu verstehen und eine jeweilige Gewichtung kann je nach Ausprägung des Analyseergebnisses, des Geräts, des Gerätetyp oder der sicherheitsrelevanten Systemanforderung auch in einer anderen Art und Weise ausgestaltet sein, wie bspw. in einer abgestuften Art und Weise.

In einer Weiterbildung der Erfindung weist das Bereitstellen des zumindest ein Analyseergebnisses die Analyse des Zustands in Abhängigkeit eines zu erwartenden Zustands der technischen Funktion des Geräts auf.

Bei dem Bereitstellen des zumindest einen Analyseergebnisses wird der Zustand der zumindest ein technischen Funktion gegenüber den Anforderungen der sicherheitsrelevanten Systemanforderungen bewertet. So kann bereits die sicherheitsrelevante Systemanforderungen selbst definieren, ob der Zustand die sicherheitsrelevante Systemanforderungen erfüllt oder nicht. Beispielsweise kann bei der sicherheitsrelevanten Systemanforderungen "Authentifizierung" gefordert werden, dass der Zustand eine Zwei-Faktor Authentifizierung aufweisen muss, damit diese sicherheitsrelevante Systemanforderungen erfüllt ist. Ferner kann die sicherheitsrelevante Systemanforderungen "Portfreigabe" fordern, dass nur Ports geöffnet sind, die während einer Engineering- bzw. Projektierungsphase des Automatisierungssystems als zwingend erforderlich für einen einwandfreien Betrieb des Geräts ermittelt wurden. Die dabei für diese sicherheitsrelevante Systemanforderung offenzuhalten Ports stellen die zu erwartenden Zustände der technischen Funktion des Geräts dar. Beispielsweise zeigt der zu erwartende Zustand eine Notwendigkeit für offene Ports 75 und 99 an, wobei bei der Erstellung des Analyseergebnisses nun die Ports 75 und 99 gegen die in dem Zustand der zumindest einen technischen Funktion mitgeteilten offenen Ports verglichen wird. Der Zustand zeigt die offenen Ports 75, 80 und 99 an. Somit ist das Analyseergebnisses dieser sicherheitsrelevanten Systemanforderungen nicht erfüllt ist, weil der aktuelle Zustand mehr offene Ports anzeigt, als durch den zu erwartenden Zustand vorgegeben ist. Somit kann in vorteilhafter Weise durch diese Weiterbildung der Erfindung die Bereitstellung des zumindest einen Analyseergebnisses, welches in einem nachfolgenden Schritt bei der Erstellung des Signals zur Ermittlung des Sicherheitszustand des Automatisierungssystems verwendet wird, verbessert werden.

In einer Weiterbildung der Erfindung wird die sicherheitsrelevante Systemanforderung aus zumindest zwei Stufen gebildet, wobei die zweite Stufe eine höhere Sicherheitsanforderung an das Gerät stellt als die erste Stufe, mit folgenden Schritten:

- die zumindest eine technische Funktion des Geräts für die zweite Stufe und der Zustand der zumindest einen technischen Funktion bereitgestellt werden;
- das Analyseergebnis der sicherheitsrelevanten Systemanforderung auf Basis der zweiten Stufe gebildet wird;
- falls durch das Analyseergebnis angezeigt wird, dass der Zustand der zumindest einen technischen Funktion die zweite Stufe der sicherheitsrelevanten Systemanforderungen nicht erfüllt, die zumindest eine technische Funktion des Geräts für die erste Stufe bereitgestellt, der Zustand der zumindest einen technischen Funktion bereitgestellt und das Analyseergebnis der sicherheitsrelevanten Systemanforderung auf Basis der ersten Stufe gebildet werden.

Hierdurch wird in vorteilhafter Weise ermöglicht, dass die sicherheitsrelevante Systemanforderung auf Basis von zwei Stufen gebildet werden kann, welche unterschiedliche Sicherheitsanforderungen an das Gerät stellen. Beispielsweise fordert die zweite Stufe der sicherheitsrelevanten Systemanforderung "Authentifizierung", dass ein Nutzer eine 2-Faktor Authentifizierung nutzen muss. Zeigt der Zustand der einen technischen Funktion, dass keine 2-Faktor Authentifizierung durch das Gerät unterstützt wird, so wird im nächsten Schritt die erste Stufe dieser sicherheitsrelevanten Systemanforderung geprüft. Diese erste Stufe fordert, dass das Gerät irgendeine Authentifizierung für den Zugang eines Nutzers bereitstellen muss. Zeigt der Zustand der zumindest einen technischen Funktion, dass zur Authentifizierung ein Passwort genutzt wird, so ist die erste Stufe dieser sicherheitsrelevanten Systemanforderung erfüllt. Zeigt der Zustand hingegen, dass kein Passwort zum Zugang des Geräts durch den Nutzer erforderlich ist, so ist in diesem Fall auch die erste Stufe der sicherheitsrelevanten Systemanforderung nicht erfüllt.

Durch diese Weiterbildung kann eine komplexere sicherheitsrelevante Systemanforderung durch das erfindungsgemäße Verfahren umgesetzt werden. Hierdurch kann sowohl eine vielfältige Anzahl von sicherheitsrelevanten Systemanforderungen bestehender und zukünftiger Standards realisiert werden, als auch der Sicherheitszustand des Automatisierungssystems in einer detaillierteren Art und Weise bestimmt werden.

Der Begriff höhere Sicherheitsanforderungen wird im Vergleich zu einer niedrigeren Sicherheitsanforderung derart verstanden, dass eine Manipulation der technischen Funktion mit einer höheren Sicherheitsanforderung komplexer und/oder aufwendiger ist, als bei der technischen Funktion mit einer niedrigeren Sicherheitsanforderungen. Beispielsweise weist eine mit einer Schlüssellänge 256 Bit verschlüsselte Datenkommunikation eine höhere Sicherheitsanforderungen auf als eine verschlüsselte Datenkommunikation mit einer Schlüssellänge von 64 Bit. In einem anderen Beispiel weist eine sicherheitsrelevante Systemanforderungen "Authentifizierung" bei Vorhandensein einer 2-Faktor Authentifizierung eine höhere Sicherheitsanforderungen auf als bei Verwendung eines Passwortes, welches eine niedrigeren Sicherheitsanforderungen entspricht.

In einer Weiterbildung des oben genannten Vorgehens kann das Bereitstellen des zumindest einen Analyseergebnisses und/oder das Erstellen des Signals auf Basis des zumindest einen Analyseergebnisses unter Berücksichtigung der ersten und/oder zweiten Stufe der sicherheitsrelevanten Systemanforderung durchgeführt werden. Hierdurch kann die Bereitstellung des Analyseergebnisses und/oder das Erstellen des Signals in einer detaillierteren Art und Weise bewerkstelligt werden. Dies ermöglicht eine detailliertere und somit genauere Ermittlung des Sicherheitszustands des Automatisierungssystems.

Die Erfindung betrifft überdies eine Sicherheitseinrichtung zum Ermitteln eines Sicherheitszustands zumindest einer sicherheitsrelevanten Systemanforderung eines Automatisierungssystems, wobei das Automatisierungssystem mehrere Geräte aufweist,

mit folgenden Einheiten:

a) Anforderungseinheit zum Bereitstellen von zumindest einer technischen Funktion des Geräts für die jeweilige sicherheitsrelevante Systemanforderung;
b) Kommunikationseinheit zum Bereitstellen eines Zustands der zumindest einen technischen Funktion des Geräts;
c) Speichereinheit zum Speichern des Zustands der zumindest einen technischen Funktion;
d) Analyseeinheit zum Bereitstellen zumindest eines Analyseergebnisses durch Analyse des Zustands unter Berücksichtigung der sicherheitsrelevanten Systemanforderung;
e) Auswerteeinheit zum Erstellen eines Signals auf Basis des zumindest einen Analyseergebnisses, wobei das Signal den Sicherheitszustand signalisiert.

In einer Weiterbildung der Erfindung sind die Einheiten der Sicherheitseinrichtung derart ausgestaltet, dass damit die Weiterbildungen / Schritte des Verfahrens zur Ermittlung des Sicherheitszustands implementierbar und realisierbar sind.

Die Vorteile des Verfahrens und dessen Weiterbildungen sind auch für die Sicherheitseinrichtung zutreffend.

Die Erfindung wird anhand einer Figur näher erläutert. Diese Figur zeigt beispielhaft ein Automatisierungssystem mit vier Geräten, welches zum Ermitteln eines Sicherheitszustands des Automatisierungssystems durch eine Sicherheitseinrichtung überwacht wird.

In den Figuren sind Elemente mit gleicher Funktion und Wirkungsweise mit denselben Bezugszeichen versehen.

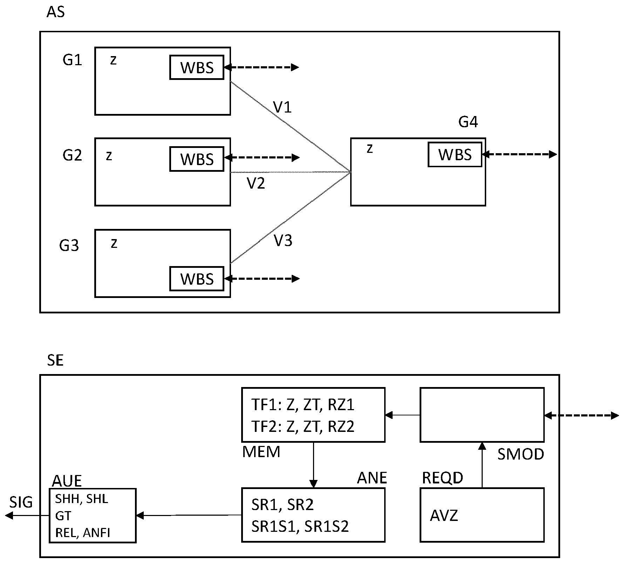

Die einzige Figur zeigt beispielhaft ein Automatisierungssystem AS mit vier Geräten G1, ..., G4, die über Verbindungen V1, V2, V3 zum Datenaustausch miteinander verbunden sind. Die Geräte G1 und G3 steuern jeweils einen Roboter, das Gerät G2 steuert ein Förderbands und das Gerät G4 ist ein Netzwerkverbindungsgerät (Englisch: Switch), welches den Datenaustausch über ein LAN/IP-basiertes Protokoll (LAN: Local Area Network, IP: Internet Protocol) der Verbindungen V1, V2, V3 steuert, wie beispielsweise Pakete von einem sendenden Gerät zu einem empfangenden Gerät weiterleitet. Das Automatisierungssystem führt mit den Robotern einen jeweiligen Fertigungsschritt an einem Werkstück aus und transportiert mit dem Förderband das Werkstück von dem einen Roboter zu dem anderen Roboter.

In einem anderen Beispiel des Automatisierungssystems im Bereich der Prozessindustrie sind die Geräte G1 und G3 Steuerungen von Tanks, in denen Flüssigkeiten verarbeitet werden, und das Gerät G2 steuert ein System von Pumpen und Ventilen, das die Flüssigkeit von dem Verarbeitungsschritt im Gerät G1 zu dem Verarbeitungsschritt in dem Gerät G3 transportiert.

Um das Automatisierungssystem gegenüber einem oder mehreren sicherheitsrelevanten Systemanforderungen, z.B. gemäß den Systemanforderungen SR1, SR2 (SR - System Requirements) eines Anforderungskatalogs wie bspw. Standard IEC 62443-2-4 und IEC 62443-3-3, zu bewerten, werden zu der jeweiligen sicherheitsrelevanten Systemanforderung eine oder mehrere technische Funktionen TF1, TF2 eines oder mehrerer der Geräte ausgewählt, die für die Ermittlung des Sicherheitszustands benötigt werden.

So fordert der Standard IEC 62443-3-3 für eine sicherheitsrelevante Systemanforderung SR1 "menschliche Nutzer Identifikation und Authentifikation" (im Standard bezeichnet als SR 1.1), dass alle menschlichen Nutzer für einen Zugriff auf eines der Geräte identifiziert und authentifiziert werden müssen. Hierzu unterscheidet dieser Standard folgende Stufen:

- Stufe 0 (SR1S0): nicht alle Nutzer sind identifizierbar oder authentifizierbar
- Stufe 1 (SR1S1): alle Nutzer sind identifizierbar und authentifizierbar
- Stufe 2 (SR1S2): Stufe 1 und alle Nutzer sind eindeutig identifizierbar und authentifizierbar
- Stufe 3 (SR1S3): Stufe 2 und es steht eine Multifaktor-Authentifizierung für Nutzerzugriffe aus nichtvertrauenswürdigen Netzen zur Verfügung
- Stufe 4 (SR1S4): Stufe 3 und die Multifaktor-Authentifizierung steht für alle Nutzerzugriffe zur Verfügung

Ein Verweis auf eine niedrigere Stufe, z.B. "Stufe 3: Stufe 2 und ...", bedeutet, dass die Stufe die Anforderungen aus der niedrigeren Stufe und die noch weitere beschrieben Anforderung erfüllen muss. Die Bezugszeichen SRxSy bezeichnet für x die sicherheitsrelevante Systemanforderung und für y die jeweilige Stufe des sicherheitsrelevanten Systemanforderung.

Jedes Gerät in der Figur verfügt über eine Web-basierte Schnittstelle WBS über das ein Nutzer Daten im Gerät einstellen und/oder Daten abrufen kann. Die Kommunikation mit der Web-basierten Schnittstelle WBS kann über die Kommunikationsverbindungen hergestellt werden (in der Figur nicht gezeigt). Der Nutzer muss sich zum Datenaustausch mit der Web-basierten Schnittstelle vorab authentifizieren.

Zur Bewertung der sicherheitsrelevante Systemanforderung SR1 hält eine Sicherheitseinheit SE, siehe Figur, einen jeweiligen Zustand Z der einen oder mehreren technischen Funktionen TF1, TF2 des jeweiligen Geräts G1, G2, G3, G4 in einer Speichereinheit MEM organisiert gespeichert bereit. Hierzu kann die Sicherheitseinheit SE aktiv die implementierte technische Funktion "Nutzerzugang" bei dem jeweiligen Gerät abfragen, wobei diese technische Funktion angibt, welche Art an Authentifizierung pro registrierten Nutzer im Gerät verwendet und welche Methode der Identifikation pro Nutzer angewendet wird.

So erhält die Sicherheitseinrichtung folgende erste Liste L1 von dem Gerät G1, wobei die erste Liste L1 den Zustand Z der technischen Funktion TF1 "Nutzerzugang" wiedergibt. Der Zustand dieser technischen Funktion Z(TF1) wird in der Speichereinheit MEM abgelegt:

| | | |
|---|---|---|
| Nutzername | MsGreen | MrMiller |
| Einzel-/Gruppenzugang | Einzel | Einzel |
| Art der Identifikation | Multifaktor | Schlüsselwort |
| Art der Authentifizierung | Passwort&SMS | Passwort |

Die erste Liste L1 zeigt den Zustand Z der technischen Funktion TF1 derart, dass alle Nutzer einen Einzelzugang nutzen und sich sowohl bei der Identifikation als auch bei der Authentifizierung individuell ausweisen müssen. Der Einzelzugang bedeutet, dass der jeweilige Nutzer eindeutig identifizierbar ist, also ein spezifischer Nutzerzugang nicht für mehrere Personen, wie z.B. ein Administratorzugang, zur Verfügung gestellt wird. Da nur der Nutzer MsGreen eine MultiFaktor- Authentifizierung in Form einer Eingabe eines Passworts und eines Pins, das über SMS (SMS- Short Message Service) dem Nutzer zugestellt wird, liegt für alle Nutzer zumindest eine Authentifizierung aber keine Multifaktor- Authentifizierung vor - der Nutzer MrMiller verwendet nur ein Schlüsselwort. Hieraus ergibt sich, dass ein Analyseergebnis AZ1 anzeigt, dass der Zustand der technischen Funktion des Geräts die Stufe 2 der systemrelevanten Sicherheitsanforderung SR1 anzeigt, und somit die technische Funktion die Stufe 2 bereitstellt.

Sowohl eine Zuordnung der sicherheitsrelevanten Systemanforderung SR1 zu einem oder mehreren technischen Funktionen als auch eine Analyse des jeweiligen Zustands zu spezifischen Anforderungen der Stufen der sicherheitsrelevanten Systemanforderung, wird in einer Analyseeinheit ANE zur Verfügung gestellt. Zur Durchführung der Analyse für eine spezifische sicherheitsrelevante Systemanforderung liest die Analyseeinheit den jeweiligen Zustand des bzw. der technischen Funktionen und wertet diese, gemäß einer vorliegenden Beschreibung der sicherheitsrelevanten Systemanforderung aus. So kann die Analyseeinheit für die Analyse jeder sicherheitsrelevanten Systemanforderung einen separat auszuführenden Softwarecode oder eine Beschreibungssprache, wie Perl, die die Analyseschritte in einer formalisierten Beschreibung wiedergibt, vorliegen. Im vorliegenden Beispiel wird als Analyseergebnis AZ1 die höchste Stufe der sicherheitsrelevanten Systemanforderung, die der Zustand der technischen Funktion anzeigt, also AZ1 = Stufe 2.

Zur Ermittlung eines Signals SIG auf Basis des Analyseergebnisses durch eine Auswerteeinheit AUE, das eine Beurteilung eines Sicherheitszustands SHH, SHL eines oder mehrere der Geräte und somit des Automatisierungssystems AS ermöglicht, kann das Analyseergebnis AZ1 der zumindest einen sicherheitsrelevanten Systemanforderungen anhand eines Zahlenwertes erfolgen. So kann den Stufen 0 bis 4 der sicherheitsrelevanten Systemanforderung SR1 jeweils ein Zahlenwert derart zugeordnet werden, dass das Analyseergebnis, das einen hohen Sicherheitszustand anzeigt, einen höheren Zahlenwert als Signal SIG ausgibt als ein Analyseergebnis, das Schwachstellen in dem Gerät bzw. in der Automatisierungssystem anzeigt. So werden den fünf Stufen folgende Zahlenwerte zugeordnet:

Stufe 0 - SIG=0;
Stufe 1 - SIG=0,25;
Stufe 2 - SIG=0,5;
Stufe 3 - SIG=0,75;
Stufe 4 - SIG=1,0.

Neben einer linearen Verteilung von Zahlenwerten zwischen 0 und 1 auf die 5 Stufen kann diese auch nicht-linear erfolgen, wenn bzw. ein Unterschied in einem Sicherheitszustand zwischen zwei Stufen als geringer eingestuft wird als zwischen zwei anderen Stufen. Im vorliegen Beispiel könnte der Zahlenwert für die Stufe 3 zu SIG=0,9 gesetzt werden, weil eine Zweifaktor-Autorisierung insbesondere bei einem Zugriff bei einem Nutzerzugriff aus einem nichtvertrauenswürdigen Netz eine besonders hohe Sicherheit darstellt.

Die Sicherheitseinheit SE empfängt die Zustände der technischen Funktionen der Geräte beispielsweise auf eigene Anforderung, zu, von dem Gerät bzw. dem Automatisierungssystem AS, bestimmten Zeitpunkten. Somit liegen in der Speichereinheit MEM die Zustände der verschiedenen technischen Funktionen der mehreren Geräte nicht alle zum gleiche Abfragezeitpunkt vor. Die Zustände können somit "veraltet" sein und für die Zuverlässigkeit einer Beurteilung des Sicherheitszustands des Geräts bzw. des Automatisierungssystems kritisch sein. Daher wird neben dem Zustand auch ein Zeitpunkt ZP im Speichereinheit MEM abgelegt, der anzeigt, wann der Zustand der technischen Funktion ermittelt wurde. Im Rahmen der Ermittlung des Signals durch die Auswerteeinheit kann neben den für die jeweilige Stufe relevanten Zahlenwerten der Zeitpunkt dahingehend einfließen, dass je länger der Zeitpunkt in der Vergangenheit liegt, desto niedriger wird der Zahlenwert des Signals. Beispielsweise wird pro Tag ein fester Wert, e.g. 0,5 abgezogen. Alternativ kann auch in Abhängigkeit vom Alter des Zustands eine dem Zustand zugewiesene Stufe der sicherheitsrelevanten Systemanforderung um eine oder mehrere Stufen reduziert werden, wobei zumindest die niedrigste Stufe als Analyseergebnis ausgewiesen wird.

Insbesondere kann die Sicherheitseinheit SE auf Basis der in der Speichereinheit MEM enthaltenen Zustände eine Analyse jederzeit unabhängig durchführen, ohne dafür mit dem Automatisierungssystem AS interagieren zu müssen.

Ferner kann die Bildung des Signals für ein bestimmtes Analyseergebnis bei zwei Geräten mittels Referenzzahlenwerte unterschiedlich sein. Hierdurch kann berücksichtigt werden, dass ein erstes Gerät G4 sicherheitskritischer ist als ein zweites Gerät G1. Beispielsweise werden zu schließende Ports einer Firewall, die nicht geschlossen sind, durch das Signal als kritischer, z.B. durch einen niedrigen numerischen Wert, bewertet, als zu schließende Ports eines Robotersteuergeräts, weil sich das Robotersteuergerät in einem gesicherten Subnetzwerks befindet. Zudem können die Referenzzahlenwerte auch dynamisch angepasst werden, um im oder außerhalb des Automatisierungssystems auftretenden Ereignissen reagieren zu können. Beispielsweise wird der Sicherheitseinheit mitgeteilt, dass in anderen Automatisierungssystemen bestimmte Geräte und/oder bestimmte technische Funktionen manipuliert worden sind. Dann kann durch Anpassung der Referenzzahlenwerte der Einfluss der Zustände von manipulierten Geräten und/oder technischen Funktionen in dem Signal SIG erhöht werden. In analoger Weise kann eine potentielle Manipulation durch einen Eindringling in ein Subnetzwerk oder auch Auswirkungen eines technischen Updates, z.B. durch einen Patch, innerhalb des Automatisierungssystem erkannt werden, so dass durch Änderung der Referenzzahlenwerte zur Abbildung eines Zustands von technischen Funktionen durch das Analyseergebnis, Auswirkungen der Manipulation bzw. des technischen Updates im Signal SIG besser erkannt bzw. abgebildet werden können.

Die Ermittlung der Zustände wird insbesondere so gewählt, dass das Automatisierungssystem durch die Übermittlung der Zustände in seiner Funktionsweise nicht gestört wird. Aufgrund von sehr exakten Signalläufen innerhalb der Verbindungen kommt somit eine Übertragung der Zustände während Produktionspausen, Wartungsarbeiten oder während einer Reduktion einer Produktionsgeschwindigkeit in Betracht. Zur Reduktion von unnötigen Datentransfers von Zuständen innerhalb des Automatisierungssystems kann der Zeitpunkt eines Zustands auch von dem Gerät und/oder dem Automatisierungssystem selbst gesteuert werden. So übermittelt das Gerät den Zustand "Nutzerzugang" in Form der ersten Liste immer dann, wenn sich etwas ändert oder wenn die letzte Änderung mindestens einen vorgebbaren Zeitraum überschreitet. Hierzu kann das jeweilige Gerät beim Hochfahren des Automatisierungssystem eine Kommunikationsverbindung mit einem Kommunikationsmodul SMOD der Sicherheitseinheit eingehen, über die das Kommunikationsmodul dem Gerät explizit die benötigten technischen Funktionen mitteilt und das Gerät die zu den benötigten technischen Funktionen zugehörigen Zustände übermittelt. Beispielsweise kann das Kommunikationsmodul über die Web-basierte Schnittstelle WBS des jeweiligen Gerätes Informationen, wie Zustände, austauschen. In der Figur sind diese Kommunikationswege mit einem gestrichelten Doppelpfeil symbolisch aufgezeigt. Hierbei kann das Kommunikationsmodul die Kommunikation parametrisieren, wie beispielsweise wie häufig oder in welchem Umfang eine Übermittlung der Zustände stattfinden soll. Der Umfang kann dadurch skaliert werden, ob immer der gesamte Zustand oder nur die geänderten Teile des Zustands der technischen Funktion übertragen werden sollen.

Der Sicherheitszustand der technischen Funktion "Nutzerzugang" kann direkt aus dem dazugehörigen Zustand ermittelt werden, siehe vorangehendes Beispiel. Es gibt auch sicherheitskritische Systemanforderungen, wie ein Systemanforderung "SR 3.5" des Standards IEC 62443-2-4, die gegen einen Referenzzustand RZ analysiert werden muss. Hierzu wird beispielsweise während eines Engineerings und/oder des Hochfahrens des Geräts bzw. des Automatisierungssystems der zu der technischen Funktion gehörigen Referenzzustand RZ ermittelt.

Die Systemanforderung SR 3.5 fordert, dass nur Software- und Hardwarefeatures in dem Gerät / Automatisierungssystem zur Benutzung verfügbar sind, die von der Automatisierungslösung benötigt oder von dem Betreiber zugelassen sind. Hierzu gibt der Referenzzustand RZ eine oder mehrere technische Funktionen an, die im Gerät als Softwarefeature und/oder Hardwarefeature als zulässig realisiert ist/sind. Die Referenzzustände RZ1...RZ4 sind folgendermaßen ausgebildet:

- RZ1(TF1) = Zulässige IPv4-Adresse: 192.168.179.35

- RZ2(TF2) = Zulässige Ports: 95, 99, 1024-1059
- RZ3(TF3) = Zulässige USB-Schnittstelle: keine
- RZ4(TF4) = Zulässige Applikationen: Appl, App5, App9

Die erste technische Funktion betrifft die IPv4 Adresse, die zweite technische Funktion die Ports, die dritte technische Funktion die USB-Schnittstelle und die vierte technische Funktion die Nutzung/Freischaltung von Applikationen (=Apps). Somit darf das Gerät mit den vier technischen Funktionen TF1...TF4 nur IPv4-Adresse 192.168.179.35 (IP: Internet Protokoll, v4: Version 4) aufweisen, die Ports = 95, 99, 1024 bis 1059 nutzen, keine USB Ports (USB: Universal Serial Bus) zum Datentausch freischalten bzw. benutzen und nur die Applikationen Appl, App5 und App9 in dem Gerät ablaufen lassen. Diese Einschränkungen für den Betrieb des Geräts wird pro technischer Funktion durch den jeweiligen Referenzzustand der technischen Funktion RZ1 (TF1) ...RZ4 (TF4) festgelegt.

Die Speichereinheit verfügt zu jeder der vier technischen Funktionen TF1...TF4 über jeweilige dazugehörige Zustände Z1...Z4, die folgendermaßen ausgebildet sind:

- Z1(TF1) = Zulässige IPv4-Adresse: 192.168.179.35
- Z2(TF2) = Zulässige Ports: 95, 99, 1024-1059
- Z3(TF3) = Zulässige USB-Schnittstelle: USB1
- Z4(TF4) = Zulässige Applikationen: Appl, App5, App9

Die Analyseeinheit ANE vergleicht den ersten Referenzzustand mit dem ersten Zustand, den zweiten Referenzzustand mit dem zweiten Zustand, den dritten Referenzzustand mit dem dritten Zustand und den vierten Referenzzustand mit dem vierten Zustand. Dabei wird erkannt, dass bis auf den dritten Zustand Z3 alle anderen Zustände Z1, Z2 und Z4 den dazugehörigen Referenzzuständen entsprechen. Daher wird ein Analyseergebnis AZ1 erzeugt, das anzeigt, dass nicht alle technischen Funktionen die systemrelevanten Sicherheitsanforderung SR3.1 erfüllen. So kann ein Wert für das Analyseergebnis AZ=0,25 anzeigen, dass eine der vier technischen Funktionen nicht erfüllt ist. Alternativ kann das Analyseergebnis AZ1=0 sein, um anzuzeigen, dass nicht alle vier technischen Funktionen der sicherheitsrelevanten Systemanforderung entsprechen. Nachfolgend kann das Signal SIG = SHL gesetzt werden, um zu signalisieren, dass der Sicherheitszustand des Geräts bzw. des Automatisierungssystems niedrig (=SHL) ist. Würden die Zustände aller technischen Funktionen dem jeweils vorgebaren Referenzzustand entsprechen, so würde dies das Analyseergebnis zeigen und das Signal SIG=SHH gesetzt werden, wobei SHH einen hohen Sicherheitszustand des Geräts bzw. des Automatisierungssystems widerspiegelt.

Neben der Betrachtung eines einzelnen Geräts können zu Bildung des Signals die Zustände von technischen Funktionen mehrerer Geräte betrachtet werden. In der obigen Ausführung mit den Referenzzuständen werden nun 3 Geräte betrachtet, die jeweils unterschiedliche Werte für die vier Referenzzustände der vier technischen Funktionen aufweisen. Bei der Analyse der Zustände der jeweiligen Geräte unter Berücksichtigung der dazugehörigen Referenzzustände ergibt sich für das Gerät G1 und G2, dass keine Abweichung zwischen den Zuständen und den Referenzzuständen besteht. Somit ergibt sich für das erste Gerät G1 das erste Analyseergebnis AZ1=4, weil alle 4 technischen Funktionen des ersten Geräts richtig konfiguriert sind, und für das zweite Gerät G1 das zweite Analyseergebnis AZ2=4, weil alle 4 technischen Funktionen des zweiten Geräts richtig konfiguriert sind. Im dritten Gerät ist nur einer der vier technischen Funktionen richtig konfiguriert, d.h. nur einer der vier Zustände entspricht dem Referenzzustand, sodass das dritte Analyseergebnis AZ3=1 gesetzt wird. Diese drei Analyseergebnisse werden and due Auswerteeinheit AUE übermittelt, die erkennt, dass es Defizite in der Konfiguration der drei Geräte gibt und erreicht als Signal einen Zuverlässigkeitswert zu WERT = (4+4+1)/12 = 75%. Dabei zeigt ein Wert zwischen 0% und 100% an, wie gut die sicherheitsrelevante(n) Systemanforderung(en) in dem Automatisierungssystem erfüllt werden, also ein kleiner Wert, dass die sicherheitsrelevante(n) Systemanforderung(en) kaum, und ein großer Wert, dass die sicherheitsrelevante(n) Systemanforderung(en) sehr gut, erfüllt werden. Die Auswerteeinheit weist den WERT gemäß einer vorgebaren Zuordnungsvorschrift auf einen hohen oder niedrigen Sicherheitszustand SSH bzw. SHL und somit das Signal SIG=SSH oder SHL, zu. Im vorliegenden Beispiel besagt die Zuordnungsvorschrift, dass bei einem WERT > 90% SIG=SHH und ansonsten SIG=SHL gesetzt werden soll. Somit wird das Signal SIG=SHL gesetzt und signalisiert einen niedrigen Sicherheitszustand.

In einem weiteren Beispiel übermitteln die vier Geräte G1, G2, G3 und G4 Listen, die ihren Zustand Z bzgl. der technischen Funktion "Nutzerzugang" wiedergibt an die Speichereinheit MEM. Der Zeitstempel, an dem die jeweilige Liste bei der Speichereinheit ankommt und dort abgelegt wird, wird registriert. Im Folgenden wird der Zeitstempel zu normal gesetzt, wenn der zwischen Ablegen und Analyse des Zustands bzw. der Liste durch die Analyseeinheit maximal 5h vergangen sind, ansonsten wird der Zeitstempel mit alt gesetzt. Ferner sind die Geräte unterschiedlichen Gerätetypen zugeordnet, wobei diese im Rahmen der Analyse und der Auswerte und der Erstellung des Signals in die Ermittlung des >Sicherheitszustands einfließen. So zeigt der jeweilige Zustand bei den Geräten folgenden Inhalt:

Gerät G1:

|  |  |  |
|---|---|---|
| Gerätetyp: Steuerung | | |
| Zeitstempel: normal | | |
| Nutzername | MsGreen | MrMiller |
| Einzel-/Gruppenzugang | Einzel | Einzel |
| Art der Identifikation | Multifaktor | Schlüsselwort |
| Art der Authentifizierung | Passwort&SMS | Passwort |

Gerät G2:

|  |  |  |
|---|---|---|
| Gerätetyp: Steuerung | | |
| Zeitstempel: alt | | |
| Nutzername | MsGreen | MrMiller |
| Einzel-/Gruppenzugang | Einzel | Einzel |
| Art der Identifikation | Multifaktor | Schlüsselwort |
| Art der Authentifizierung | Passwort&SMS | Passwort |

Gerät G3:

|  |  |  |
|---|---|---|
| Gerätetyp: Steuerung | | |
| Zeitstempel: normal | | |
| Nutzername | MsGreen | MrMiller |
| Einzel-/Gruppenzugang | Einzel | Einzel |
| Art der Identifikation | Multifaktor | Schlüsselwort |
| Art der Authentifizierung | Multifaktor | Schlüsselwort |

Gerät G4:

|  |  |  |
|---|---|---|
| Gerätetyp: Firewall | | |
| Zeitstempel: normal | | |
| Nutzername | MsGreen | MrMiller |
| Einzel-/Gruppenzugang | Einzel | Einzel |
| Art der Identifikation | Multifaktor | Schlüsselwort |
| Art der Authentifizierung | Multifaktor | Schlüsselwort |

Auf Basis der Zustände der vier Geräte wird - analog zu dem vorhergehenden Beispiel zur sicherheitsrelevanten Systemanforderung SR1 "menschliche Nutzer Identifikation und Authentifikation" (im Standard IEC 62443-3-3 bezeichnet als SR 1.1), das jeweilige Analyseergebnis AZ1...AZ4 pro Gerät ermittelt zu AZ1(G1)= Stufe 2, AZ2(G2)= Stufe 2, AZ3(G3)= Stufe 4, AZ4(G4)= Stufe 4. Diese werden zusammen mit dem jeweiligen Gerätetyp und dem jeweiligen Zeitstempel des Geräts an die Auswerteeinheit übermittelt.

Gemäß dem vorangegangenen Beispiel wird jede Stufe mit einem Wert zwischen 0 und 1 zur Bildung des Signals SIG bewertet, also Stufe 2 mit einem Zuverlässigkeitswert ZW=0,5 und Stufe 4 mit ZW=1,0. Ferner wird für einen Zeitstempel "alt" der zu dem Zustand dazugehörige Zuverlässigkeitswert mit 0,5 multipliziert, weil der Zustand veraltet sein könnte. Zur Berücksichtigung des Gerätetyps bei der Erstellung des Signals wird für ein Gerät, das als kritische Komponente in dem Automatisierungssystem, wie z.B. die Firewall, betrachtet wird, wird der Zuverlässigkeitswert mit einem Faktor 0,5 multipliziert, falls das Analyseergebnis des Geräts die Stufe 2 oder kleiner anzeigt, ansonsten wird mit dem Faktor 2 die Multiplikation des Zuverlässigkeitswerts durchgeführt. Somit ergibt sich das Signal SIG bspw. zu:

$$SIG = (0,5 + 0,5*0,5 + 1,0 + 1.0*2.0) / 4 = 0,9375$$

Anmerkung zur Bildung des Signals:

0,5: für erstes Gerät G1
0,5*0,5: für zweites Gerät G2
1,0: für das dritte Gerät G3
1.0*2.0: für das vierte Gerät G4

Somit zeigt das Signal einen hohen Wert 0,9375 an, der einen hohen Sicherheitszustand der Automatisierungsanlage anzeigt. Werden zu späteren Zeitpunkten dieselben Analysen durchgeführt, so kann anhand des numerischen Wertes für das Signal SIG in einfacher Weise und automatisiert erkannt werden, ob sich der Sicherheitszustand der Automatisierungsanlage verbessert, gleichgeblieben oder verschlechtert hat. Neben dem numerischen Wert kann auch durch einen binären Wert ein hoher bzw. ein niedriger Sicherheitszustand SHH bzw. SHL ermittelt werden.

In einer alternativen Form zur Auswertung des obigen Beispiels wird eine Minimumfunktion MIN verwendet, die aus einer Liste von Werten den kleinsten Wert liefert. So kann das Signal SIG gebildet werden zu:

$$\text{SIG} = \text{MIN}[0,5;\ 0,5*0,5;\ 1,0;\ 1.0*2.0] = 0,25$$

Diese Art der Auswertung liefert als Sicherheitszustand eine Information des Geräts, welches von allen Geräten am wenigsten die sicherheitsrelevante(n) Systemanforderung(en) erfüllt, bzw. das Gerät, welches am leichtesten manipuliert werden kann. Somit steuert das "schwächste" Gerät den Sicherheitszustand.

Werden die Analyseergebnisse von zwei oder mehrere sicherheitsrelevanter Systemanforderungen SR1, SR2, für die Bildung des Signals betrachtet, so können diese Analyseergebnisse in Abhängigkeit von einer Relevanz REL der sicherheitsrelevanten Systemanforderungen bei Bildung des Signals berücksichtigt werden. Beispielsweise betrifft das erste Analyseergebnis die sicherheitsrelevante Systemanforderung "Nutzerzugang" (wie in oben Beispielen aufgezeigt) und das zweite Analyseergebnis die sicherheitsrelevante Systemanforderung "Ports", die vorgibt, dass nur benutzte Ports geöffnet sein dürfen. Da für die Beurteilung des Sicherheitszustands des Automatisierungssystems der "Nutzerzugang" einen höhere Priorität hat als die "Ports" wird das erste Analyseergebnis mit einer höheren Relevanz als das zweite Analyseergebnis in der Erstellung des Signals gewichtet, z.B. 2/3 mit dem ersten Analyseergebnis und 1/3 mit dem zweiten Analyseergebnis.

Ferner kann bei dem Erstellen des Signals ein Analyseergebnis eines Geräts höher gewichtet werden als das eines anderen Geräts. Ein erstes Gerät, welches sowohl im Automatisierungssystem als auch im öffentlichen Internet erreichbar ist, ist wahrscheinlich mehr Angriffen ausgesetzt als ein zweites Gerät, das nur im Automatisierungssystem erreichbar ist. Daher wird das Analyseergebnis des ersten Geräts, mit höherer Gewichtung in das Signal einfließen als das Analyseergebnis des zweiten Gerätes. Des Weiteren können Informationen über eine Anfälligkeit ANFI eines Geräts oder Gerätetyps, beispielsweise aus einem anderen Automatisierungssystem, vorliegen, wie bspw. ein neuartiger Cyberangriff auf eine bestimmte Komponente des Geräts. Diese Anfälligkeit kann dann auch bei der Erstellung des Signals berücksichtigt werden, indem dem Analysegerät eines Geräts mit der Information bezüglich einer "besonderen" Anfälligkeit eine höhere Gewichtung beigemessen wird als für das Analyseergebnis eines anderen Geräts.

Das Verfahren kann durch die Einheiten einer Vorrichtung, auch als Sicherheitseinrichtung SE bezeichnet, in Hardware, Software oder in einer Kombination aus Hard- und Software implementiert und ausgeführt werden. Die Vorrichtung weist einen Prozessor, einen Speicher und ein oder mehrere Ein- und Ausgabeeinheiten auf, mit denen die Einheiten der Sicherheitseinrichtung realisierbar sind. Das Verfahren kann als ausführbarer Programmcode in dem Speicher abgelegt sein, zum Ausführen in den Prozessor geladen und dort schrittweise ausgeführt werden. Das Automatisierungssystem der Erfindung kann in Form einer Produktionsanlage, einem Rechnernetz, einem Krankenhauspatienteninformationssystem, einer Gleis- oder Signalanlage, einer smart home Installation, einer Lokomotive oder eines Elektrofahrzeugs ausgestaltet sein.

**Patentansprüche**

1. Verfahren zum Ermitteln eines Sicherheitszustands (SHH, SHL) von zumindest einer sicherheitsrelevanten Systemanforderung (SR1, SR2) eines Automatisierungssystems (AS), wobei das Automatisierungssystem (AS) mehrere Geräte (G1...G4) aufweist, mit folgenden Schritten:

   a) Bereitstellen von zumindest einer technischen Funktion (TF1, TF2) des Geräts (G1...G4) für die jeweilige sicherheitsrelevante Systemanforderung (SR1, SR2);
   b) Bereitstellen eines Zustands (Z) der zumindest einen technischen Funktion (TF1, TF2) des Geräts (G1...G4);
   c) Bereitstellen zumindest eines Analyseergebnisses (AZ1...AZ4) durch Analyse des Zustands (Z) unter Berücksichtigung der sicherheitsrelevanten Systemanforderung (SR1, SR2);

d) Erstellen eines Signals (SIG) auf Basis des zumindest einen Analyseergebnisses (AZ1...AZ2), wobei das Signal (SIG) den Sicherheitszustand (SSH, SHL) signalisiert.

2. Verfahren nach Anspruch 1, bei dem
die Bereitstellung des Zustands (Z) der technischen Funktion (TF1, TF2) zumindest folgende Schritte umfasst:

   - Abrufen des Zustands (Z) der zumindest einen technischen Funktion (TF1, TF2) von dem Gerät (G1);
   - Speichern des Zustands (Z) für die Analyse, insbesondere außerhalb des Automatisierungssystems (AS).

3. Verfahren nach Anspruch 2, bei dem
das Abrufen des Zustands (Z) zu einem vorgebbaren Zeitpunkt (AVZ)

   - von dem Gerät (G1) abgerufen wird, oder
   - von dem Gerät (G1) selbstständig zum Speichern übermittelt wird.

4. Verfahren nach Anspruch 3, bei dem
der vorgebbare Zeitpunkt (AVZ) vor einem Produktionsbeginn, während einer Produktionspause, während einer Wartungsarbeit und/oder während einer reduzierten Produktionsgeschwindigkeit des Geräts (G1) gesetzt wird.

5. Verfahren nach einem der Ansprüche 2 bis 4, bei dem
das Speichern des Zustands (Z) ferner einen Zeitstempel (ZT) über einen Zeitpunkt des Abrufs des Zustands (Z) aufweist.

6. Verfahren nach Anspruch 5, bei dem
das Erstellen des Signals (SIG) auf Basis des zumindest einen Analyseergebnisses (AZ1...AZ2) eine Gewichtung des jeweiligen Analyseergebnisses für das Gerät (G1) in Abhängigkeit des Zeitstempels (ZT) aufweist.

7. Verfahren nach einem der vorangehenden Ansprüche, bei dem das Erstellen des Signals (SIG) auf Basis des zumindest einen Analyseergebnisses (AZ1...AZ2) eine Gewichtung des jeweiligen Analyseergebnisses für das Gerät (G1) in zumindest einer der folgenden Abhängigkeiten aufweist:

   - von einem Gerätetyp (GT) des Geräts (G1...G3);
   - von einer vorgebaren Relevanz (REL) der sicherheitsrelevanten Systemanforderung (SR1) zu einer vorgebaren Relevanz (REL2) einer weiteren sicherheitsrelevanten Systemanforderung (SR2);
   - von Anfälligkeit (ANFI) des Geräts (G1) aufgrund einer Schwachstelleninformation und/oder einer Lage des Geräts (G1) innerhalb des Automatisierungssystems (AS);
   - von zumindest einem Analyseergebnis (AZ2) eines der weiteren Geräte (G2);
   - von zumindest einem Analyseergebnis (AZ2) eines der weiteren Geräte (G2), welches denselben Gerätetyp (GT) aufweist wie das Gerät (G1);

8. Verfahren nach einem der vorangehenden Ansprüche, bei dem das Bereitstellen des zumindest eines Analyseergebnisses (AZ1...AZ4) eine Analyse des Zustands (Z) in Abhängigkeit eines zu erwartenden Referenzzustands (RZ1...RZ4) der technischen Funktion (TF1...TF4) des Geräts (G1) aufweist.

9. Verfahren nach einem der vorangehenden Ansprüche, bei dem die sicherheitsrelevante Systemanforderung (SR1) aus zumindest zwei Stufen (SR1S1, SR1S2) gebildet wird, wobei die zweite Stufe (SR1S2) eine höhere Sicherheitsanforderung an das Gerät (G1) stellt als die erste Stufe (SR1S1), mit folgenden Schritten:

   die zumindest eine technische Funktion (TF1) des Geräts (G1...G4) für die zweite Stufe (SR1S2) und der Zustand (Z) der zumindest einen technischen Funktion (TF1) bereitgestellt werden;
   das Analyseergebnis (AZ1) der sicherheitsrelevanten Systemanforderung (SR1) auf Basis der zweiten Stufe (SR1S2) gebildet wird;
   falls durch das Analyseergebnis (AZ1) angezeigt wird, dass der Zustand (Z) der zumindest einen technischen Funktion (TF1) die zweite Stufe (SR1S2) der sicherheitsrelevanten Systemanforderung (SR1) nicht erfüllt, die zumindest eine technische Funktion (TF1) des Geräts (G1...G4) für die erste Stufe (SR1S1) bereitgestellt, der Zustand (Z) der zumindest einen technischen Funktion (TF1) bereitgestellt und das Analyseergebnis (AZ1) der sicherheitsrelevanten Systemanforderung (SR1) auf Basis der ersten Stufe (SR1S1) gebildet werden.

10. Verfahren nach Anspruch 9, bei dem
das Bereitstellen des zumindest eines Analyseergebnisses (AZ1) und/oder das Erstellen des Signals (SIG) auf Basis des zumindest einen Analyseergebnisses (AZ1...AZ2) unter Berücksichtigung der ersten und/oder zweiten Stufe (SR1S1, SR1S2) der sicherheitsrelevanten Systemanforderung (SR1) durchgeführt werden.

11. Sicherheitseinrichtung (SE) zum Ermitteln eines Sicherheitszustands (SHH, SHL) zumindest einer sicherheitsrelevanten Systemanforderung (SR1, SR2) eines Automatisierungssystems (AS), wobei das Automatisierungssystem (AS) mehrere Geräte (G1...G4) aufweist,
mit folgenden Einheiten:

a) Anforderungseinheit (REQD) zum Bereitstellen von zumindest einer technischen Funktion (TF1, TF2) des Geräts (G1...G4) für die jeweilige sicherheitsrelevante Systemanforderung (SR1, SR2) ;
b) Kommunikationseinheit (SMOD) zum Bereitstellen eines Zustands (Z) der zumindest einen technischen Funktion (TF1, TF2) des Geräts (G1...G4);
c) Speichereinheit (MEM) zum Speichern des Zustands (Z) der zumindest einen technischen Funktion (TF1, TF2);
d) Analyseeinheit (ANE) zum Bereitstellen zumindest eines Analyseergebnisses (AZ1...AZ2) durch Analyse des Zustands (Z) unter Berücksichtigung der sicherheitsrelevanten Systemanforderung (SR1, SR2);
e) Auswerteeinheit (AUE) zum Erstellen eines Signals (SIG) auf Basis des zumindest einen Analyseergebnisses (AZ1...AZ2), wobei das Signal (SIG) den Sicherheitszustand (SSH, SHL) signalisiert.

12. Sicherheitseinrichtung (SE) nach Anspruch 11,
wobei die Einheiten (REQD, SMOD, MEM, ANE, AUE) der Sicherheitseinrichtung (SE) derart ausgelegt sind, dass Merkmale der Ansprüche 2 bis 11 implementierbar und ausführbar sind.

EP 3 979 011 A1

**Europäisches Patentamt**
**European Patent Office**
**Office européen des brevets**

## EUROPÄISCHER RECHERCHENBERICHT

**Nummer der Anmeldung**

EP 20 20 3552

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 568 783 A (FISHER ROSEMOUNT SYSTEMS INC [US]) 29. Mai 2019 (2019-05-29) * Zusammenfassung * ----- | 1,11 | INV. G05B19/042 G06F21/57 |
| X | US 10 250 619 B1 (PARK DANIEL D [US] ET AL) 2. April 2019 (2019-04-02) * Spalte 4, Zeile 30 - Spalte 8, Zeile 42 * * Spalte 9, Zeile 25 - Spalte 15, Zeile 55 * ----- | 1-12 | |
| X | EP 3 101 586 A1 (ROCKWELL AUTOMATION TECH INC [US]) 7. Dezember 2016 (2016-12-07) * Absätze [0011], [0012], [0071] - [0076], [0097], [0098]; Abbildungen 1-11 * ----- | 1-10,12 | |

**RECHERCHIERTE SACHGEBIETE (IPC)**

G05B
G06F

Der vorliegende Recherchenbericht wurde für alle Patentansprüche erstellt

| Recherchenort | Abschlußdatum der Recherche | Prüfer |
|---|---|---|
| München | 31. März 2021 | Barriuso Poy, Alex |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 3552

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2021

| Im Recherchenbericht angeführtes Patentdokument | Datum der Veröffentlichung | Mitglied(er) der Patentfamilie | Datum der Veröffentlichung |
|---|---|---|---|
| GB 2568783 A | 29-05-2019 | CN 109597365 A<br>DE 102018124266 A1<br>GB 2568783 A<br>JP 2019067393 A | 09-04-2019<br>04-04-2019<br>29-05-2019<br>25-04-2019 |
| US 10250619 B1 | 02-04-2019 | KEINE | |
| EP 3101586 A1 | 07-12-2016 | CN 106227160 A<br>EP 3101586 A1<br>US 2016359825 A1 | 14-12-2016<br>07-12-2016<br>08-12-2016 |

EPO FORM P0461

Für nähere Einzelheiten zu diesem Anhang : siehe Amtsblatt des Europäischen Patentamts, Nr.12/82